# EUROPEAN PATENT APPLICATION

(11) **EP 4 797 342 A2**
(43) Date of publication of application: **26.08.2026**
(21) Application number: 26159116.8
(22) Date of filing: 17.02.2026
(51) Int. Cl.: H01M 4/133, H01M 4/134, H01M 4/1393, H01M 4/1395, H01M 4/36, H01M 4/38, H01M 4/583, H01M 4/62, H01M 10/0525

(54) **SILICON-CARBON COMPOSITE MATERIAL, ANODE ELECTRODE PLATE, AND MANUFACTURING METHOD OF SILICON-CARBON COMPOSITE MATERIAL**

(30) Priority: 20.02.2025 TW 114106164
(71) Applicant: Hon Hai Precision Industry Co., Ltd., 236038 New Taipei City (TW); SolidEdge Solution Inc., 300094 Hsinchu City (TW)
(72) Inventor: CHEN, Mao-Sung, 300094 Hsinchu City (TW); CHEN, Wei-Lun, 300094 Hsinchu City (TW); CHANG, Tseng-Lung, 300094 Hsinchu City (TW)
(74) Representative: Mewburn Ellis LLP

(57) **Abstract**

The present disclosure provides a silicon-carbon composite material, a anode electrode plate, and a manufacturing method for the silicon-carbon composite material. The silicon-carbon composite material comprises a silicon-carbon core and a carbon support layer covering the silicon-carbon core. The silicon-carbon core consists of nanosilicon particles and a carbon buffer layer that envelops the nanosilicon particles. A specific surface area of the silicon-carbon composite material ranges 1.0 m²/g to 5.0 m²/g.

## Description

### BACKGROUND

### Field of Invention

The present disclosure relates to a silicon-carbon composite material, a anode electrode, and a manufacturing method of silicon-carbon composite material.

### Description of Related Art

The application areas of lithium-ion secondary batteries include consumer electronics, electric vehicles, grid energy storage systems and distributed power generation devices. The commercial success of lithium-ion secondary batteries in these markets depends on factors such as cost, energy density, rate capability, cycle life and safety, which are primarily determined by the electrode materials employed. Although silicon exhibits a significantly higher theoretical specific capacity than graphite, it is merely regarded as a highly promising anode material. However, silicon anodes still face challenges related to improving electrical conductivity and mitigating volume expansion during charge and discharge.

### SUMMARY

The present disclosure provides a silicon-carbon composite material. The silicon-carbon composite material comprises a silicon-carbon core and a carbon support layer covering the silicon-carbon core. The silicon-carbon core consists of a plurality of nanosilicon particles and a carbon buffer layer that envelops the nanosilicon particles. A specific surface area of the silicon-carbon composite material ranges from 1.0 m²/g to 5.0 m²/g.

In some embodiments, a Raman spectrum of the silicon-carbon composite material has a peak intensity ID at 1500cm⁻¹ to 1200 cm⁻¹ and a peak intensity IG at 1800cm⁻¹ to 1500 cm⁻¹, and a ratio of the peak intensity ID to the peak intensity IG is 0.7 to 2.0.

In some embodiments, a particle size of the nanosilicon particles ranges from 10 nm to 50 nm.

In some embodiments, a particle size of the silicon-carbon core ranges from 2 µm to 4 µm.

In some embodiments, a particle size of the silicon-carbon composite material ranges from 3 µm to 7 µm.

In some embodiments, a thickness of the carbon support layer ranges from 1 µm to 3 µm.

In some embodiments, the silicon-carbon core further comprises a doping element and the doping element includes a group IIIA element, a group VA element, a transition metal element, or a combination thereof.

In some embodiments, a carbon content of the silicon-carbon composite material ranges from 5 wt% to 30 wt%, a silicon content of the silicon-carbon composite material ranges from 65 wt% to 90 wt%, and the doping element content of the silicon-carbon composite material ranges from 0.5 wt% to 10 wt%.

The present disclosure provides a anode electrode plate. The anode electrode plate comprises a mixture of a silicon-carbon composite material, a conductive agent and a binder. The silicon-carbon composite material includes a silicon-carbon core and a carbon support layer that envelops the silicon-carbon core. The silicon-carbon core includes a plurality of nanosilicon particles and a carbon buffer layer covering the nanosilicon particles. A Raman spectrum of the silicon-carbon composite material has a peak intensity ID at 1500cm⁻¹ to 1200 cm⁻¹ and a peak intensity IG at 1800cm⁻¹ to 1500 cm⁻¹, and a ratio of the peak intensity ID to the peak intensity IG is 0.7 to 2.0.

In some embodiments, a proportion of the silicon-carbon composite material in the anode electrode plate exceeds 94 wt%, a proportion of the conductive agent in the anode electrode plate is less than 1 wt%, and a proportion of the binder in the anode electrode plate is less than 5 wt%.

In some embodiments, a rolling density of the anode electrode plate is 1.5 g/cm³ to 1.7 g/cm³.

The present disclosure provides a manufacturing method for silicon-carbon composite material. The method includes the following steps. A plurality of nanosilicon particles are covered with a carbon buffer layer material to form a first piece. A first compaction process is performed on the first piece to form a first ingot. A first sintering process is performed on the first ingot to form a silicon-carbon core. The silicon-carbon core is then covered with a carbon support layer material to form a second piece. A second compaction process is performed on the second piece to form a second ingot. A second sintering process is performed on the second ingot to form the silicon-carbon composite material.

In some embodiments, a pressure of the first compaction process ranges from 1 MPa to 30 MPa, and a pressure of the second compaction process ranges from 1 MPa to 30 MPa.

In some embodiments, a pressurization time of the first compaction process ranges from 15 minutes to 120 minutes and a pressurization time of the second compaction process ranges from 15 minutes to 120 minutes.

In some embodiments, a pressure increase rate of the first compaction process ranges from 1 MPa/min to 2 MPa/min and a pressure increase rate of the second compaction process ranges from 1 MPa/min to 2 MPa/min.

In some embodiments, the first compaction process and the second compaction process respectively comprise a pre-compaction process and a post-compaction process, a ratio of a pressure of the pre-compaction process to a pressure of the post-compaction process ranges from 0.1 to 0.8, and a pressurization time of the pre-compaction process ranges from 15 minutes to 60 minutes.

In some embodiments, the method further includes mixing and grinding a silicon powder and a doping material to form the nanosilicon particles, wherein the doping material comprises a group IIIA element, a group VA element, a transition metal element, or a combination thereof.

In some embodiments, the method further includes mixing and grinding a silicon powder, a solvent, and a surface modifier to form the nanosilicon particles, in which the surface modifier has a hydroxyl group, a carboxylic acid group, an amide group, an ester group, or a combination thereof.

In some embodiments, a temperature of the first sintering process is from 500 °C to 800 °C, and a temperature of the second sintering process ranges from 800 °C to 1200 °C.

In some embodiments, the carbon buffer layer material comprises sucrose, glucose, starch, polyvinyl pyrrolidone, asphalt, epoxy resin, cellulose or a combination thereof, and the carbon support layer material comprises asphalt, natural graphite, artificial graphite, mesophase carbon microspheres, expanded graphite, graphene, carbon nanotubes or a combination thereof.

It is to be understood that both the foregoing general description and the following detailed description are provided as examples, and are intended to provide further explanation of the disclosure as claimed.

### BRIEF DESCRIPTION OF THE DRAWINGS

The disclosure can be more fully understood by reading the following detailed description of the embodiments, with reference to the accompanying drawings as follows:
Fig. 1 is a schematic cross-sectional view of a silicon-carbon composite material according to some embodiments of the present disclosure.
Fig. 2 is a flowchart of the steps of a method for manufacturing a silicon-carbon composite material according to some embodiments of the present disclosure.
Fig. 3 is a schematic cross-sectional view of a anode electrode plate according to some embodiments of the present disclosure.
Fig. 4A is an electron microscope image of a silicon-carbon core according to experimental example 1 of the present disclosure.
Fig. 4B is an electron microscope image of the silicon-carbon composite material according to experimental example 1 of the present disclosure.
Fig. 5 is a graph showing a rate charge and discharge test of a lithium-ion battery according to experimental example 1 of the present disclosure.
Fig. 6 is a graph showing the cycle life test of the lithium-ion battery according to experimental example 1 of the present disclosure.

### DETAILED DESCRIPTION

In view of the above problems, the present disclosure provides a silicon-carbon composite material. The silicon-carbon composite material comprises a silicon-carbon core and a carbon support layer covering the silicon-carbon core. The silicon-carbon core includes a plurality of nanosilicon particles and a carbon buffer layer that envelops the nanosilicon particles. The carbon buffer layer and the carbon support layer can inhibit the expansion of silicon powders, act as a buffer and support, and increase the overall conductivity. In addition, the dense coating on the silicon surface can achieve a low specific surface area of the silicon-carbon composite material, reduce the formation of the solid electrolyte interface (SEI), and reduce the loss of irreversible capacity. The lithium-ion battery may have the properties of high specific capacity, low cycle expansion, and long cycle life. The silicon-carbon composite material of the present disclosure will be described below in sequence with reference to the drawings.

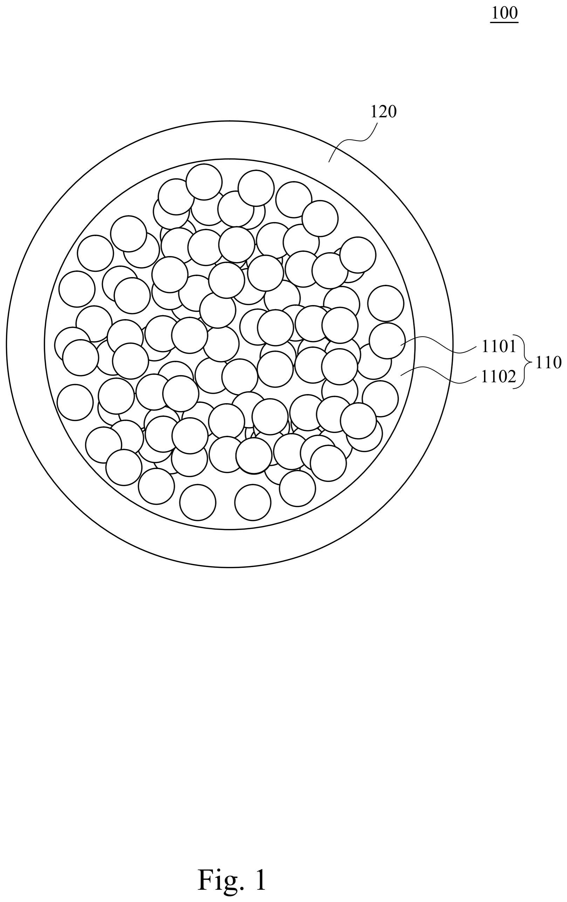

Please refer to Fig. 1, which is a schematic cross-sectional view of a silicon-carbon composite material 100 according to some embodiments of the present disclosure. A silicon-carbon composite material 100 is provided, which comprises a silicon-carbon core 110 and a carbon support layer 120 covering the silicon-carbon core 110. The silicon-carbon core 110 includes a plurality of nanosilicon particles 1101 and a carbon buffer layer 1102 that envelops the nanosilicon particles 1101. In some embodiments, a specific surface area of the silicon-carbon composite material 100 ranges from 1.0 m²/g to 5.0 m²/g, such as 1.0 m²/g, 2.0 m²/g, 3.0 m²/g, 4.0 m²/g, or 5.0 m²/g. The carbon buffer layer 1102 and the carbon support layer 120 can inhibit the expansion of the nanosilicon particles 1101 and increase the overall conductivity. At the same time, the double-layer covering provides complete coverage and support, ensuring that the silicon-carbon composite material 100 maintains a low specific surface area, reduces the formation of SEI, and improves the first coulombic efficiency. The lithium-ion batteries may have the properties of high specific capacity, low cycle expansion, and long cycle life. In some embodiments, a Raman spectrum of the silicon-carbon composite material 100 has a peak intensity ID at 1500 cm⁻¹ to 1200 cm⁻¹ and a peak intensity IG at 1800 cm⁻¹ to 1500 cm⁻¹, and a ratio (ID/IG) of the peak intensity ID to the peak intensity IG is from 0.7 to 2.0, such as 0.7, 0.9, 1.1, 1.3, 1.5, 1.7, or 2.0. When ID/IG is too low, lithium ions are not easy to migrate in and out, which may be detrimental to rate and cycle performance. When ID/IG is too high, a large proportion of amorphous carbon will exist, which may reduce the specific capacity. When ID/IG of the silicon-carbon composite material 100 is within the above range, it has an appropriate amount of surface defects, which can ensure the migration of lithium ions in and out and the stability of the SEI film, and has a better cycle life.

Please continue to refer to Fig. 1. In some embodiments, the particle sizes of the nanosilicon particles 1101 ranges from 10 nm to 50 nm, such as 10 nm, 20 nm, 30 nm, 40 nm, or 50 nm. When the particle sizes of the of nanosilicon particles 1101 are too large, the expansion amplitude caused by charging and discharging may be greater. Conversely, when the particle sizes of the of nanosilicon particles 1101 are too small, the cost may be higher. When the particle sizes of the plurality of nanosilicon particles 1101 are controlled within the above range, the nanosilicon particles 1101 can have higher electron mobility and improve the fast charging constant current direct charging rate. In some embodiments, the particle size of the silicon-carbon core 110 ranges from 2 µm to 4 µm, such as 2.0 µm, 2.4 µm, 2.8µm, 3.2 µm, 3.6 µm, or 4.0 µm. When the particle size of the silicon-carbon core 110 is too small, the carbon buffer layer 1102 may not be sufficient to provide a buffer to suppress silicon expansion. When the particle size of the silicon-carbon core 110 is too large, the electron mobility may be reduced. In some embodiments, the particle size of the silicon-carbon composite material 100 is from 3 µm to 7 µm, such as 3.0 µm, 3.5µm, 4.0 µm, 4.5 µm, 5.0 µm, 5.5 µm, 6.0 µm, 6.5 µm, or 7.0 µm. When the particle size of the silicon-carbon composite material 100 is too small, the first coulombic efficiency may be reduced. When the particle size of the silicon-carbon composite material 100 is too large, the electron mobility may be reduced. In some embodiments, a thickness of the carbon support layer is from 1 µm to 3 µm, such as 1.0 µm, 1.4 µm, 1.8 µm, 2.2 µm, 2.6µm, or 3.0 µm. When the thickness of the carbon support layer is too small, it may not be sufficient to provide a buffer to suppress silicon expansion. When the thickness of the carbon supporting layer is too large, the electron mobility may be reduced.

In some embodiments, the silicon-carbon core 110 further includes a doping element. The doping element comprises a group IIIA element, a group VA element, a transition metal element, or a combination thereof. The low conductivity of intrinsic silicon can be improved by adding the doping element. In some embodiments, the carbon content of the silicon-carbon composite material 100 is from 5 wt% to 30 wt%, such as 5 wt%, 10 wt%, 15 wt%, 20 wt%, 25 wt%, or 30 wt%. The silicon content of the silicon-carbon composite material 100 is from 65 wt% to 90 wt%, such as 65 wt%, 70 wt%, 75 wt%, 80 wt%, 85 wt%, or 90 wt%. The doping element content of the silicon-carbon composite material 100 is from 0.5 wt% to 10 wt%, such as 0.5 wt%, 2.5 wt%, 4.5 wt%, 6.5 wt%, 8.5 wt%, or 10 wt%. By controlling the content of the doping element within the above range, the silicon-carbon composite material 100 can have a higher electrical conductivity. By controlling the carbon content and the silicon content of the silicon-carbon composite material 100 within the above ranges, the silicon-carbon composite material 100 can have sufficient coating to provide buffering and support, while avoiding the low migration rate of lithium ions caused by excessive carbon content. In some embodiments, the doping element includes B, Al, Ga, In, TI, N, P, As, Sb, Bi, Sc, Ti, V, Cr, Mn, Co, Cu, Zn, Y, Zr, Nb, Mo, Tc, Ru, Rh, Pd, Ag, Cd, or a combination thereof, but are not limited thereto.

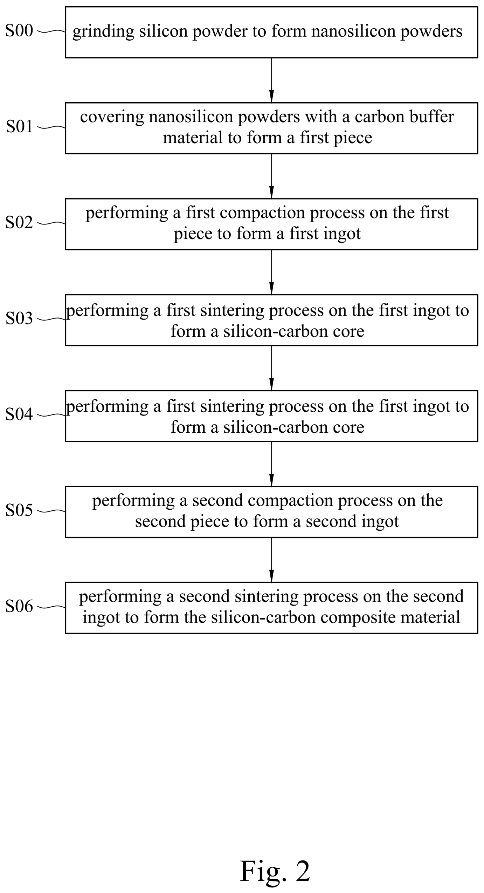

Next, please refer to Fig. 1 and Fig. 2 to explain the manufacturing method of the silicon-carbon composite material 100. Fig. 2 is a flow chart of steps of a method for manufacturing the silicon-carbon composite material 100 according to some embodiments of the present disclosure. The method for manufacturing the silicon-carbon composite material 100 includes the following steps. In step S00, the silicon powders are ground to form a plurality of nanosilicon particles 1101. In step S01, the nanosilicon particles 1101 are covered with a carbon buffer layer material to form a first piece. In step S02, a first compaction process is performed on the first piece to form a first ingot. In step S03, a first sintering process is performed on the first ingot to form a silicon-carbon core 110. In step S04, the silicon-carbon core 110 is covered with a carbon support layer material to form a second piece. In step S05, a second compaction process is performed on the second piece to form a second ingot. In step S06, a second sintering process is performed on the second ingot to form the silicon-carbon composite material 100.

Please continue to refer to Fig. 1 and Fig. 2. In step S00, the silicon powders are ground to form the nanosilicon particles 1101. Nano-sizing silicon powders can reduce the stress caused by silicon expansion during charging and discharging. In some embodiments, the grinding process includes dry grinding, wet grinding, electrical discharge machining, or fluidized bed machining, but is not limited thereto. In some embodiments, the grinding process is performed in a protective environment to prevent the nanosilicon particle 1101 from being oxidized. The protective environment is, for example, vacuum, protective solvent, or an atmosphere of nitrogen, argon, mixed hydrogen, etc., but is not limited thereto. In some embodiments, the grinding process is performed at a temperature of 10 °C to 15 °C to prevent excess heat from oxidizing the nanosilicon particles 1101. In some other embodiments, the silicon powders and the doping material are mixed and ground to form a plurality of nanosilicon particles 1101. The doping material includes a group IIIA element, a group VA element, a transition metal element, or a combination thereof. The doping material can improve the low conductivity of intrinsic silicon. In some other embodiments, the doping material includes B, P, or N, but is not limited thereto. In the silicon powders and the doping material, the added amount of the doping material is from 1.0wt% to 5.0wt% of the silicon powders, but is not limited thereto. In some other embodiments, the silicon powders, a solvent and a surface modifier may be mixed and ground to form the plurality of nanosilicon particles 1101. The surface modifier has a hydroxyl group, a carboxylic acid group, an amide group, an ester group, or a combination thereof. The surface modifier has a positive charge and can serve as a medium to assist the deposition and stacking of nanosilicon particle 1101 below 100 nm on the carbon buffer layer 1102 through electrostatic adsorption self-assembly. The surface modifier can also be used as an elastic protective layer on the outer layer of the nanosilicon particles 1101 after being carbonized by heat treatment. The solvent can prevent the nanosilicon particles 1101 from being oxidized. In some embodiments, the surface modifier includes polyvinyl pyrrolidone, polyvinyl alcohol, polyphthalamide, polypropylene, sodium dodecylbenzene sulfonate, but is not limited thereto. In some embodiments, the solvent includes diethylene glycol, N-methylpyrrolidone, polyethylene glycol, propylene glycol, and dimethyl sulfoxide, but is not limited thereto. Among the silicon powders, the solvent and the surface modifier, the added amount of the surface modifier is from 1.0 wt% to 10.0 wt% of the silicon powders, but is not limited thereto. In some embodiments, the silicon powders are first nano-sized to a particle size of 10 nm to 50 nm and then mixed and ground with the surface modifier and/or the doping material.

Please continue to refer to Fig. 1 and Fig. 2. In step S01, the nanosilicon particles 1101 are covered with a carbon buffer layer material to form a first piece. The carbon buffer layer 1102 can inhibit the expansion of the nanosilicon particles 1101. The carbon buffer layer material includes carbon-containing materials. In some embodiments, the carbon buffer layer material includes an amorphous carbon precursor. The interlayer spacing of amorphous carbon is larger than that of silicon, which can slow down the volume expansion rate of silicon caused by the migration of lithium ions in and out of silicon. In some embodiments, the carbon buffer layer material includes an organic pyrolytic carbon precursor. The organic pyrolytic carbon precursor can fill pores and reduce the specific surface area when it passes through the glass transition temperature in the subsequent process. In some embodiments, the carbon buffer layer material includes sucrose, glucose, starch, polyvinyl pyrrolidone, asphalt, epoxy resin, cellulose or a combination thereof, but is not limited thereto. In some embodiments, the amount of the carbon buffer layer material added is 1.0 wt% to 10.0 wt% of the nanosilicon particles 1101, but is not limited thereto.

Step S01 may be performed by any surface covering technology. In some embodiments, step S01 includes the following steps. In a protective environment, the nanosilicon particles 1101 and the carbon buffer layer material are mixed and ground, and then subjected to a granulation process to form the first piece having a plurality of spherical particles. The granulation process includes spray granulation, ball mill granulation, dry granulation, cyclone granulation, but is not limited thereto. The method of the grinding process may refer to the content described foregoing step S00.

Please continue to refer to Fig. 1 and Fig. 2. In step S02, a first compaction process is performed on the first piece to form a first ingot. In some embodiments, the first piece having a plurality of spherical particles is placed in a mold and put into a chamber for pressurization. The first compaction process can fill the pores on the particle surface and reduce the specific surface area. In some embodiments, a pressure of the first compaction process is from 1 MPa to 30 MPa, such as 1 MPa, 5 MPa, 10 MPa, 15 MPa, 20 MPa, 25 MPa, or 30 MPa. When the pressure of the first compaction process is too high, the particles may be broken and splashing may occur. When the pressure of the first compaction process is too small, the efficiency of hole filling may be too low. In some embodiments, a pressurization time of the first compaction process is from 15 minutes to 120 minutes, such as 15 minutes, 40 minutes, 60 minutes, 80 minutes, 100 minutes, or 120 minutes. When the pressurization time of the first compaction process is too long, the process cost may be high. When the pressurization time of the first compaction process is too short, the hole filling may be incomplete. In some embodiments, a pressure increase rate of the first compaction process is from 1 MPa/min to 2 MPa/min, such as 1.0 MPa/min, 1.2 MPa/min, 1.4 MPa/min, 1.6 MPa/min, 1.8 MPa/min, or 2.0 MPa/min. When the pressure increase rate of the first compaction process is too fast, the continuous polymer may be interrupted at the microscopic level, and may cause particle breakage and splashing at the macroscopic level, thereby affecting production quality and the environment. When the pressure increase rate of the first tamping process is too slow, the process cost may be high. In some embodiments, the first compaction process includes a pre-compaction process and a post-compaction process. A ratio of a pressure of the pre-compaction process to a pressure of the post-compaction process is from 0.1 to 0.8, such as 0.1, 0.2, 0.4, 0.6, or 0.8. A pressurization time of the pre-compaction process is from 15 minutes to 60 minutes, such as 15 minutes, 25 minutes, 35 minutes, 45 minutes, or 60 minutes. This segmented pressurization method can prevent the particles from breaking and keep the particles in a spherical shape.

Please continue to refer to Fig. 1 and Fig. 2. In step S03, a first sintering process is performed on the first ingot to form a silicon-carbon core 110. The first sintering process can improve the density and mechanical strength of the carbon buffer layer 1102 to form a complete surface covering, and make the carbon buffer layer 1102 forms a short-range ordered carbon structure, which is conducive to the migration of lithium ions in and out. In some embodiments, a temperature of the first sintering process is from 500 °C to 800 °C, such as 500 °C, 550 °C, 600 °C, 650 °C, 700 °C, 750 °C, or 800 °C. When the temperature of the first sintering process is too low, the density and mechanical strength of the carbon support layer 120 may be insufficient. When the temperature of the first sintering process is too high, defects may be caused due to over-sintering. The first sintering process is performed in a protective environment. In some embodiments, after performing step S03, the first ingot is firstly coarsely divided into centimeter level by jet mill or jaw crusher after sintering, and then spheroidized and dispersed into secondary particle size of 10 µm to 20 µm by disc grinder or ghost tooth knife grinder to facilitate the subsequent second covering.

Please continue to refer to Fig. 1 and Fig. 2. In step S04, the silicon-carbon core 110 is covered with a carbon support layer material to form a second piece. The carbon support layer 120 as the second layer of covering can provide more complete coating and support to inhibit the expansion of the nanosilicon particles 1101. The carbon support layer materials include carbonaceous materials. In some embodiments, the carbon support layer material includes graphite-like carbon, amorphous carbon precursor or a combination thereof. In some embodiments, the carbon support layer materials include asphalt, natural graphite, artificial graphite, mesophase carbon microspheres, expanded graphite, graphene, carbon nanotubes or a combination thereof. In some embodiments, the carbon support layer material is added in an amount of 1.0 wt% to 10.0 wt% of the silicon-carbon core 110, such as 1.0 wt%, 3.0 wt%, 5.0 wt%, 7.0 wt%, 9.0 wt%, or 10.0 wt%. The process of step S04 may refer to the content described foregoing.

Please continue to refer to Fig. 1 and Fig. 2. In step S05, a second compaction process is performed on the second piece to form a second ingot. The second compaction process can fill the pores on the material surface and reduce the specific surface area. In some embodiments, a pressure of the second compaction process is from 1 MPa to 30 MPa, such as 1 MPa, 5 MPa, 10 MPa, 15 MPa, 20 MPa, 25 MPa, or 30 MPa. In some embodiments, a pressurization time of the second compaction process is from 15 minutes to 120 minutes, such as 15 minutes, 40 minutes, 60 minutes, 80 minutes, 100 minutes, or 120 minutes. In some embodiments, a pressure increase rate of the second compaction process is from 1 MPa/min to 2 MPa/min, such as 1.0 MPa/min, 1.2 MPa/min, 1.4 MPa/min, 1.6 MPa/min, 1.8 MPa/min, or 2.0 MPa/min. In some embodiments, the second compaction process includes a pre-compaction process and a post-compaction process. A ratio of a pressure of the pre-compaction process to a pressure of the post-compaction process is from 0.1 to 0.8, such as 0.1, 0.2, 0.4, 0.6, or 0.8. A pressurization time of the pre-compaction process is from 15 minutes to 60 minutes, such as 15 minutes, 25 minutes, 35 minutes, 45 minutes, or 60 minutes. The effects of the above process parameters can refer to the contents described in the above step S02. The process parameters of the second compaction process may be the same as or different from the process parameters of the first compaction process.

Please continue to refer to Fig. 1 and Fig. 2. In step S06, a second sintering process is performed on the second ingot to form the silicon-carbon composite material 100. The second sintering process can improve the density and mechanical strength of the carbon support layer 120 to form a complete surface covering, and make the carbon support layer 120 forms a short-range ordered carbon structure, which is conducive to the migration of lithium ions in and out. In some embodiments, a temperature of the second sintering process is from 800 °C to 1200 °C, such as 800 °C, 900 °C, 1000 °C, 1100 °C, or 1200 °C. When the temperature of the second sintering process is too low, the density and mechanical strength of the carbon support layer 120 may be insufficient. When the temperature of the second sintering process is too high, defects may be caused due to over-sintering. The second sintering process is performed in a protective environment. In some embodiments, after performing step S06, the silicon-carbon composite material 100 is firstly coarsely divided into centimeter level by jet mill or jaw crusher after sintering, and then spheroidized and dispersed into secondary particle size of 10 µm to 20 µm by disc grinder or ghost tooth knife grinder to facilitate the subsequent manufacture of the anode electrode plate. The above steps S00 to S06 describe in detail the method for manufacturing the silicon-carbon composite material 100 of the present disclosure.

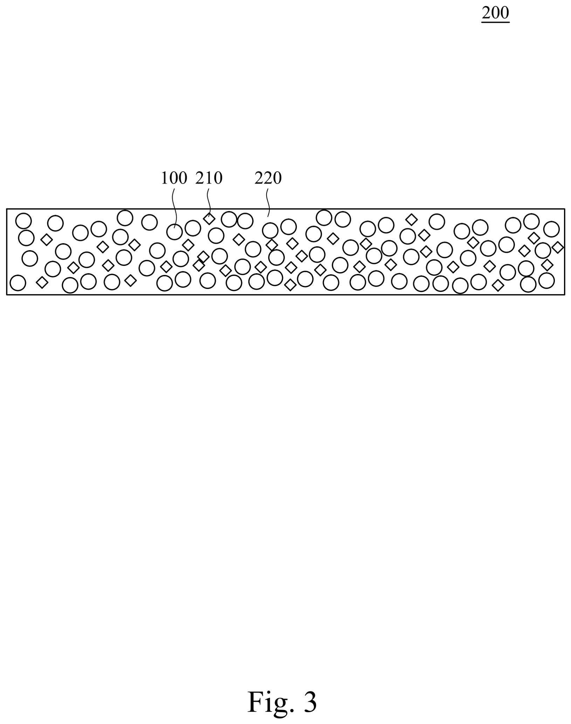

The anode electrode plate made of the silicon-carbon composite material 100 will be described below with reference to the drawings. Please refer to Fig. 3, which is a schematic cross-sectional view of a anode electrode plate 200 according to some embodiments of the present disclosure. The present disclosure provides a anode electrode plate 200. The anode electrode plate 200 includes a mixture of the silicon-carbon composite material 100, a conductive agent 210 and a binder 220. The silicon-carbon composite material 100 includes the silicon-carbon core 110 and the carbon support layer 120 covering the silicon-carbon core 110. The silicon-carbon core 110 includes a plurality of nanosilicon particles 1101 and the carbon buffer layer 1102 covering the nanosilicon particles 1101. A Raman spectrum of the silicon-carbon composite material has a peak intensity **ID** at 1500cm⁻¹ to 1200 cm⁻¹ and a peak intensity IG at 1800cm⁻¹ to 1500 cm⁻¹, and a ratio(ID/IG) of the peak intensity **ID** to the peak intensity IG is 0.7 to 2.0, such as 0.7, 0.9, 1.1, 1.3, 1.5, 1.7, or 2.0. When ID/IG is too low, lithium ions are not easy to migrate in and out, which may be detrimental to rate and cycle performance. When ID/IG is too high, a large proportion of amorphous carbon will exist, which may reduce the specific capacity. When ID/IG of the silicon-carbon composite material 100 is within the above range, it has an appropriate amount of surface defects, which can ensure the migration of lithium ions in and out and the stability of the SEI film, and has a better cycle life.

The anode electrode plate 200 includes a carbon-silicon composite material, a conductive agent 210 and a binder 220. The carbon-silicon composite material is used as a anode electrode active material. The conductive agent 210 is used to connect the anode electrode active material. The binder 220 is used to increase the adhesion between the anode electrode active material and the current collector. In some embodiments, the conductive agent 210 includes conductive materials such as single point (e.g., carbon black), linear (e.g., single-walled or multi-walled carbon nanotubes, carbon nanofiber tubes), sheet (e.g., graphene, layered graphite sheets, sheet-like artificial graphite, etc.) and spherical (spherical graphite), but is not limited thereto. In some embodiments, the binder 220 includes a high molecular weight polymer having a molecular weight of 25,000 or more. In some embodiments, the binder 220 includes cellulose, carbon nanocellulose, styrene-butadiene rubber, nitrile-butadiene rubber or a combination thereof, but is not limited thereto. In some embodiments, a proportion of the silicon-carbon composite material 100 in the anode electrode plate 200 is 85.0 wt% to 95.0 wt%, a proportion of the conductive agent 210 in the anode electrode plate 200 is 0.1 wt% to 10.0 wt%, and a proportion of the binder 220 in the anode electrode plate 200 is 1.0 wt% to 7.0 wt%. In some embodiments, the proportion of the silicon-carbon composite material 100 in the anode electrode plate 200 is greater than 94 wt%, the proportion of the conductive agent 210 in the anode electrode plate 200 is less than 1 wt%, and the proportion of the binder 220 in the anode electrode plate 200 is less than 5 wt%. When the proportions of the silicon-carbon composite material 100, the conductive agent 210, and the binder 220 in the anode electrode plate 200 are controlled to be within the above ranges, the anode electrode plate 200 has better conductivity and mechanical stability. In some embodiments, a compaction density of the anode electrode plate 200 is 1.5 g/cm³ to 1.7 g/cm³, such as 1.50 g/cm³, 1.55 g/cm³, 1.60 g/cm³, 1.65 g/cm³, or 1.70 g/cm³. When the compaction density of the anode electrode plate 200 is within the above range, the anode electrode plate 200 can have a larger volume energy density while avoiding the problem of difficulty in electrolyte infiltration.

The features of the present disclosure will be described in more detail below with reference to experimental examples. Although the following embodiments are described, the materials used, their amounts and ratios, processing details, processing procedures, etc. may be appropriately changed without exceeding the scope of the present disclosure. Therefore, the present disclosure should not be limitatively interpreted by the embodiments described below.

### Experimental example 1: preparation of silicon-carbon composite materials, anode electrode plates and lithium-ion batteries.

The preparation of the silicon-carbon composite material includes the following steps. The temperature was maintained at approximately 10 °C to 15 °C under a nitrogen atmosphere. The semiconductor level (particle size>10 µm, and ferromagnetic impurities<0.1 wt%) silicon powders were ground in a bead mill at a speed of 2400-3200 rpm. Based on the weight of silicon powders being 100%, 3.0 wt% P, or 3 wt% B and 3.5 wt% polyvinyl pyrrolidone and diethylene glycol were added and mixed and ground. The grain size was determined using the Scherrer formula. After the silicon powders were ground to a particle size of 10 nm to 50 nm, the nano silicon powders can be obtained. Based on the weight of the nanosilicon particles being 100%, 5 wt% of epoxy resin was added and the mixture was mixed and ground, followed by spray granulation. After granulation, the first piece could be obtained. The first piece was filled into a mold and a first compaction process is performed. The first compaction process includes a pre-compaction process and a post-compaction process. The pressure, pressurization time and pressure increase rate of the pre-compacting process were 5 MPa, 15 minutes and 1 MPa/minute, respectively. The pressure, pressurization time and pressure increase rate of the post-compacting process are 10 MPa, 30 minutes and 1 MPa/minute, respectively. After compaction, the first ingot can be obtained. The first ingot is subjected to a first sintering process in a nitrogen environment. The temperature and time of the first sintering process are 600 °C and 3 hours respectively. The silicon-carbon core can be obtained after sintering. After being coarsely crushed to centimeter level by jet mill, and then dispersed and sieved by disc mill to a secondary particle size of about 10 µm to 20 µm. Based on the weight of the silicon-carbon core as 100%, 5 wt% asphalt was added and mixed and ground, and then spray granulation was performed. The second piece can be obtained after grinding. The second piece is filled into the mold and a second compaction process is performed. The parameters of the second compaction process are the same as those of the first compaction process. After compaction, the second ingot can be obtained. The second ingot is subjected to a second sintering process in a nitrogen environment. The temperature and time of the second sintering process are 1000 °C and 5 hours respectively. After sintering, the second ingot can be obtained. After being coarsely crushed to centimeter level by jet mill, and then dispersed and sieved by disc mill to a secondary particle size of about 10 µm to 20 µm, so as to facilitate the subsequent preparation of the anode electrode plate.

The preparation of the anode electrode plate is to mix the above-prepared silicon-carbon composite material, Super P and PAA in a mass ratio of 88:1:11, and dissolve them in deionized water with a solid content of 50% to obtain a slurry. The slurry was coated on a copper foil current collector and dried under vacuum. After drying, the anode electrode plate is obtained by pressing with a roller press until the compaction density is greater than 1.2 g/cm³, and then adjusting to greater than 1.5 g/cm³.

The preparation of lithium-ion batteries is to assemble the above-mentioned anode electrode plates into ternary positive electrode plates using conventional production processes. The electrolyte is 1 mol/L LiPF6 solution. The solvent is ethylene carbonate, dimethyl carbonate and ethyl methyl carbonate in a volume ratio of 1:1:1. The isolation membrane is Celgard 2500. The soft-pack batteries are stacked and assembled into a 10Ah lithium-ion battery.

### Experimental example 2: testing silicon-carbon composites.

The silicon-carbon composite material was tested using a specific surface area analyzer, and the specific surface area was measured by a nitrogen adsorption/desorption method. The measured specific surface area of the silicon-carbon composite material of experimental example 1 is 2 m²/g.

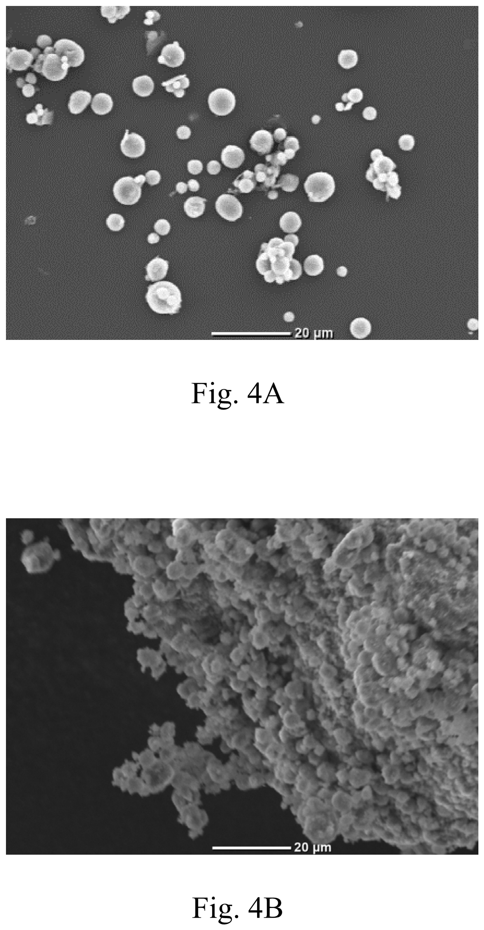

The silicon-carbon core and silicon-carbon composite material were tested using a scanning electron microscope (SEM). The magnification was 1000 times and the accelerating voltage was 10 kV. Please refer to Fig. 4A, which is an electron microscope image of the silicon-carbon core according to experimental example 1 of the present disclosure. As can be seen from Fig. 4A, the silicon-carbon core obtained by the first sintering process remains as a spherical particle without the problem of particle breakage or coating layer peeling off. Please refer to Fig. 4B, which is an electron microscope image of the silicon-carbon composite material according to experimental example 1 of the present disclosure. As can be seen from Fig. 4B, the silicon-carbon composite material finally obtained also maintains spherical particles, indicating that it has a higher tap density and can improve the volume energy density of lithium-ion batteries.

The silicon-carbon composite material was measured using an X-ray diffraction analyzer. The X-ray diffraction spectrum of the silicon-carbon composite material of experimental example 1 only shows characteristic peaks of Si (Cubic, Fd-3m, 227) and C (Hexagonal, P63/mmc, 194), indicating that it does not contain oxides, thus avoiding the problem of reducing the overall conductivity due to the presence of oxides.

The silicon-carbon composite material was measured using a Raman spectrometer. The peak intensity of the G band can be obtained by calculating the half-maximum full width of the G band from 1800 cm⁻¹ to 1500 cm⁻¹. The D band peak intensity can be obtained by calculating the half-maximum full width of the D band from 1500 cm⁻¹ to 1200 cm⁻¹. The ratio of the two can then be calculated (ID/IG). The ID/IG of the silicon-carbon composite material of experimental example 1 was measured to be 1.8. This indicates that it has an appropriate amount of surface defects, which can ensure the migration of lithium ions in and out and the stability of the SEI film, and has a better cycle life.

The appearance of the anode electrode plate made of silicon-carbon composite material was observed by SEM. After rolling, the silicon-carbon composite material of experimental example 1 did not crack, indicating that it had good mechanical strength and a complete covering layer that was not easy to peel off.

### Experimental example 3: testing Lithium-ion Batteries

The capacity test is to charge the lithium-ion battery to about 3.5V (about half full), then degas and charge it to about 4.3V. Then, the first discharge is performed to 3.0 V, and the capacitance and the first coulombic efficiency are calculated. The capacity of the lithium-ion battery of experimental example 1 can reach 200 mAh/g, and the first coulombic efficiency can reach more than 90%, indicating that it has high specific capacity and good first coulombic efficiency.

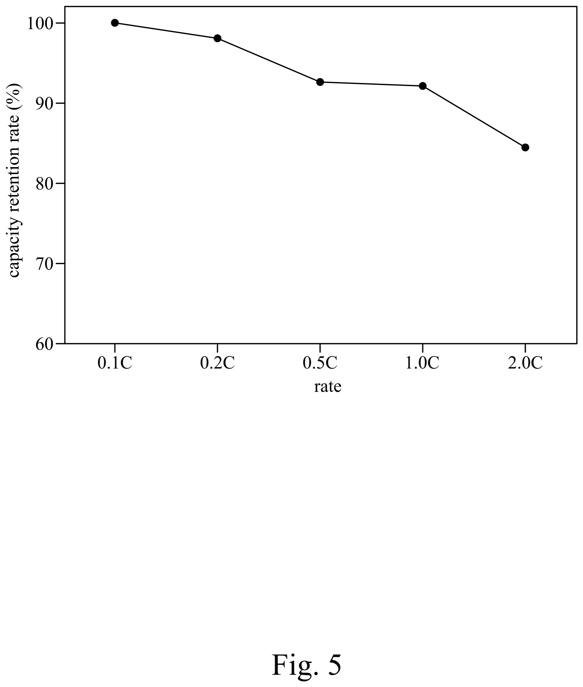

The rate performance test was carried out at different discharge rates at a current of 10 A. Please refer to Fig. 5, which is a rate charge and discharge test diagram of a lithium-ion battery according to experimental example 1 of the present disclosure. The capacity retention rates of the lithium-ion battery of experimental example 1 at discharge rates of 0.1 C, 0.2 C, 0.5 C, 1.0 C and 2.0 C are 100%, 97%, 93%, 92% and 83%, respectively.

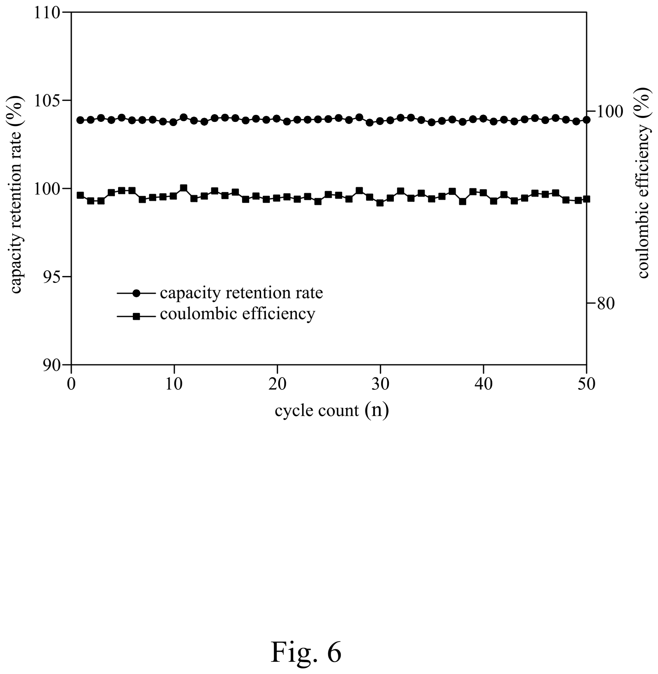

The cycle life test considers the above charge and discharge as one cycle. After the first charge and discharge, the battery was cycled 50 times at 0.33C/1C, and the capacity retention rate was calculated. Please refer to Fig. 6, which is a test diagram of the cycle life of the lithium-ion battery according to experimental example 1 of the present disclosure. As shown in Fig. 6, the capacity retention rate of the lithium-ion battery of experimental example 1 can reach more than 98% after 50 cycles. In another test, the capacity retention rate of the lithium-ion battery of experimental example 1 after 800 cycles can reach more than 80%, indicating that it can suppress cycle expansion and has a good cycle life.

In summary, the silicon-carbon composite material disclosed herein has a carbon buffer layer and a carbon support layer, which can inhibit the expansion of silicon powder and serve as a buffer and support, thereby increasing the overall conductivity. After the compaction process and the sintering process, a short-range ordered carbon structure can be formed, which is conducive to the migration of lithium ions in and out, and achieves a low specific surface area and reduces the formation of SEI, thereby reducing the loss of irreversible capacity. Lithium-ion batteries containing the silicon-carbon composite material have the properties of high specific capacity, low cycle expansion and long cycle life.

## Claims

1. A silicon-carbon composite material (100), **characterized by** comprising:
a silicon-carbon core (110), comprising:
a plurality of nanosilicon particles (1101); and
a carbon buffer layer (1102) that envelops the nanosilicon particles (1101); and
a carbon support layer (120) covering the silicon-carbon core (110), wherein a specific surface area of the silicon-carbon composite material (100) ranges from 1.0 m²/g to 5.0 m²/g.

2. The silicon-carbon composite material of claim 1, **characterized in that** a Raman spectrum of the silicon-carbon composite material (100) has a peak intensity ID at 1500cm⁻¹ to 1200 cm⁻¹ and a peak intensity IG at 1800cm⁻¹ to 1500 cm⁻¹, and a ratio of the peak intensity ID to the peak intensity IG is 0.7 to 2.0.

3. The silicon-carbon composite material of claim 1 or 2, **characterized in that** a particle size of the nanosilicon particles (1101) ranges from 10 nm to 50 nm.

4. The silicon-carbon composite material of any one of claims 1-3, **characterized in that** a particle size of the silicon-carbon core (110) ranges from 2 µm to 4 µm.

5. The silicon-carbon composite material of any one of claims 1-4, **characterized in that** a particle size of the silicon-carbon composite material (100) ranges from 3 µm to 7 µm.

6. The silicon-carbon composite material of any one of claims 1-5, **characterized in that** a thickness of the carbon support layer (120) ranges from 1 µm to 3 µm.

7. The silicon-carbon composite material of any one of claims 1-6, **characterized in that** the silicon-carbon core (110) further comprises a doping element and the doping element includes a group IIIA element, a group VA element, a transition metal element, or a combination thereof.

8. A anode electrode plate (200), **characterized by** comprising a mixture of a silicon-carbon composite material (100), a conductive agent (210) and a binder (220), wherein the silicon-carbon composite material (100) comprises:
a silicon-carbon core (110), comprising:
a plurality of nanosilicon particles (1101); and
a carbon buffer layer (1102) covering the nanosilicon particles (1101); and
a carbon support layer (120) covering the silicon-carbon core (110), wherein a Raman spectrum of the silicon-carbon composite material (100) has a peak intensity ID at 1500cm⁻¹to 1200 cm⁻¹ and a peak intensity IG at 1800cm⁻¹ to 1500 cm⁻¹, and a ratio of the peak intensity ID to the peak intensity IG is 0.7 to 2.0.

9. The anode electrode plate of claim 8, **characterized in that** a proportion of the silicon-carbon composite material (100) in the anode electrode plate (200) exceeds 94 wt%, a proportion of the conductive agent (210) in the anode electrode plate (200) is less than 1 wt%, and a proportion of the binder (220) in the anode electrode plate (200) is less than 5 wt%.

10. A manufacturing method of silicon-carbon composite material (100), **characterized by** comprising:
covering a plurality of nanosilicon particles (1101) with a carbon buffer layer (1102) material to form a first piece;
performing a first compaction process on the first piece to form a first ingot;
performing a first sintering process on the first ingot to form a silicon-carbon core (110);
enveloping the silicon-carbon core (110) with a carbon support layer (120) material to form a second piece;
performing a second compaction process on the second piece to form a second ingot; and
performing a second sintering process on the second ingot to form the silicon-carbon composite material (100).

11. The method of claim 10, **characterized in that** a pressure of the first compaction process ranges from 1 MPa to 30 MPa, and a pressure of the second compaction process is from 1 MPa to 30 MPa.

12. The method of claim 10 or 11, **characterized in that** the first compaction process and the second compaction process respectively comprise a pre-compaction process and a post-compaction process, a ratio of a pressure of the pre-compaction process to a pressure of the post-compaction process is from 0.1 to 0.8, and a pressurization time of the pre-compaction process is from 15 minutes to 60 minutes.

13. The method of any one of claims 10-12, **characterized by** further comprising:
mixing and grinding a silicon powder and a doping material to form the nanosilicon particles (1101), wherein the doping material includes a group IIIA element, a group VA element, a transition metal element, or a combination thereof.

14. The method of any one of claims 10-13, **characterized by** further comprising:
mixing and grinding a silicon powder, a solvent, and a surface modifier to form the nanosilicon particles (1101), wherein the surface modifier has a hydroxyl group, a carboxylic acid group, an amide group, an ester group, or a combination thereof.

15. The method of any one of claims 10-14, **characterized in that**:
a temperature of the first sintering process ranges from 500 °C to 800 °C, and
a temperature of the second sintering process ranges from 800 °C to 1200 °C.
